(19) **Europäisches Patentamt**
**European Patent Office**
**Office européen des brevets**

(11) **EP 3 841 801 B1**

(12) **EUROPEAN PATENT SPECIFICATION**

(45) Date of publication and mention
of the grant of the patent:
**17.07.2024 Bulletin 2024/29**

(21) Application number: **18930730.9**

(22) Date of filing: **20.08.2018**

(51) International Patent Classification (IPC):
**H04W 56/00** (2009.01)   **H04W 84/04** (2009.01)

(52) Cooperative Patent Classification (CPC):
**H04W 56/005; H04W 56/0015;** H04W 84/045

(86) International application number:
**PCT/US2018/047116**

(87) International publication number:
**WO 2020/040730 (27.02.2020 Gazette 2020/09)**

(54) **REVERSE TIMING FOR SMALL CELLS**

RÜCKWÄRTS-TIMING FÜR KLEINE ZELLEN

MINUTAGE INVERSE POUR PETITES CELLULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.06.2021 Bulletin 2021/26**

(73) Proprietor: **Cisco Technology, Inc.**
**San Jose, California 95134-1706 (US)**

(72) Inventor: **JIN, Hang**
**Plano, Texas 75025 (US)**

(74) Representative: **Jarrett, Daniel Phillip et al**
**Kilburn & Strode LLP**
**Lacon London**
**84 Theobalds Road**
**London WC1X 8NL (GB)**

(56) References cited:
WO-A1-2017/077864        WO-A1-2017/077864
US-A1- 2012 115 496      US-A1- 2012 115 496
US-A1- 2013 244 653      US-A1- 2013 244 653
US-A1- 2013 344 878      US-A1- 2013 344 878
US-A1- 2014 194 130      US-A1- 2014 194 130

**EP 3 841 801 B1**

**Description**

**TECHNICAL FIELD**

The present technology pertains in general to determining a timing for small cell base stations deployed in 5th generation (5G) heterogeneous wireless networks and more specifically to determining such timing through uplink signals from mobile devices to nearby base stations.

**BACKGROUND**

With the deployment of 5G wireless technology and with services envisioned to be provided using 5G networks, a large number of small cells need be deployed within a network as underlay or overlay. Any 5G service involving multi-cell transmission/reception (for example, carrier aggregation (CA) and Coordinated Multi Point (CoMP)) requires accurate system timing.

As small cells are typically deployed indoors, and have no access to Global Navigation Satellite System (GNSS), their timing needs to be acquired through a network, (e.g., 1588 Precision Time Protocol (FTP)). However, obtaining timing through a network has limitations. For example, it requires all in-path network devices to support 1588 PTP, which itself requires substantial upgrades to existing network components. Furthermore, in order to support the approximately 200ns timing accuracy requirement of 5G technology, number of hops between network timing reference (a grand master (GM)) and any given small cell is very limited (approximately 4 hops, assuming each in-path node introduces a SOns timing error). This requires very dense deployment of GMs, which is costly.

US 2014/194130 describes, according to its abstract, a femto base station (BS) that maintains two different timings: a femto BS downlink timing and a femto BS uplink timing. A femto base station's uplink reference timing is based on the macro uplink timing being used by one or more UE devices in the local vicinity of the femto BS. In some embodiments, the femto BS synchronizes its femto uplink timing to the macro uplink timing being used by the closest UE device transmitting uplink signals to the macro BS. In other embodiments, the femto BS determines its femto base station uplink timing based on one or more uplink signals from UE devices in its vicinity transmitting to the macro BS. In various embodiments, femto cell uplink signals and macro cell uplink signals are received at a femto cell BS in synchronization.

US 2013/344878 describes, according to its abstract, a method of determining a timing estimate for use in synchronizing a femtocell base station to a macrocell base station, the method in the femtocell base station comprising determining an uplink timing estimate from a signal transmitted from a mobile device to the macrocell base station, the mobile device being served by the macrocell base station; determining a downlink timing estimate from a signal transmitted from the macrocell base station; and determining a timing estimate for use in synchronizing the femtocell base station to the macrocell base station from the downlink timing estimate and the uplink timing estimate.

US 2013/244653 describes, according to its abstract, a mobile device providing first information to an access point over an out-of-band wireless link. The access point uses the first information to coarsely synchronize with a macrocell base station. The access point transmits a low power pilot signal that is formed using a pseudo-random noise (PN) sequence. The mobile device uses the out-of-band wireless link to provide second information to the access point that indicates a PN phase of the pilot signal with respect to a reference time point. The access point uses the second information to finely synchronize with the macrocell base station. The mobile device communicates with a mobile operator core network through the access point using an in-band wireless link to the access point. The mobile device compensates for propagation delay when obtaining time information. The mobile device provides additional information to the access point, which the access point uses to adjust for continued clock drift.

US 2012/115496 describes, according to its abstract, a system and method to provide accurate and timely updates to timing and/or frequency information for a femtocell utilizing information gathered from user equipment camped on a neighboring macrocell. In one example, user equipment camped on the neighboring macrocell actively gathers aiding information such as timing and frequency information related to the macrocell on which it is camped. The user equipment then transmits the aiding information to the femtocell utilizing a different link other than that used for communicating with the macrocell. In another example, the femtocell sniffs uplink transmissions from the user equipment that are not directed at the femtocell, but rather are normal communications between the user equipment and its serving macrocell. Here, the femtocell utilizes information it gathers about the macrocell and utilizes its WWAN interface to sniff the uplink transmissions from the user equipment and extracts timing and/or frequency information based on those transmissions.

**BRIEF DESCRIPTION OF THE DRAWINGS**

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depict only exemplary embodiments of the disclosure and are not therefore to be considered to be limiting of its scope, the principles herein are described and explained with additional specificity and detail through the use of the accompanying drawings in which:

FIG. 1 illustrates an example network setting, according to an aspect of the present disclosure;

FIG. 2 illustrates an example process for adjusting timing of a target BS of FIG. 1, according to an aspect of the present disclosure;

FIGs. 3A illustrates an example self-learning algorithm for determining uplink timing calibration values, according to an aspect of the present disclosure;

FIG. 3B illustrates an example method of using self-learning algorithm of FIG. 3A to determine uplink timing calibration values, according to an aspect of the present disclosure;

FIG. 4 illustrates an example of cluster classifications and assigned overlapped areas described with reference to FIG. 3A, according to an aspect of the present disclosure;

FIG. 5 illustrates an example computing system architecture for use in network of FIG. 1, according to an aspect of the present disclosure; and

FIG. 6 illustrates an example network device suitable for performing switching, routing, load balancing, and other networking operations, according to an aspect of the present disclosure.

## DETAILED DESCRIPTION

**An invention is defined in the appended claims.**

Various example embodiments of the disclosure are discussed in detail below. While specific implementations are discussed, it should be understood that this is done for illustration purposes only. A person skilled in the relevant art will recognize that other components and configurations may be used without parting from the scope of the disclosure. Thus, the following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be references to the same embodiment or any embodiment; and, such references mean at least one of the embodiments.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others.

Without intent to limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

A client can include a device and/or application seeking to execute a function on an Execution Endpoint. Non-limiting examples of a client can include a mobile phone, a laptop, a tablet, etc.

## OVERVIEW

Disclosed are systems, methods, and computer-readable media for determining/adjusting a timing of small cell base stations deployed in 5th generation (5G) heterogeneous wireless networks through timing detected on uplink signals from mobile devices to nearby base stations.

In one aspect of the present disclosure, a method includes detecting, by a target network component, at least one uplink signal between a mobile device and a neighboring network component; determining, by the target network component, a timing of the at least one uplink signal; determining, by the target network component, a current system timing of the target network component; and adjusting, by the target network component, the current system timing of the target network component using the timing of the at least one uplink signal.

In one aspect of the present disclosure, a target network component includes memory having computer-readable instructions stored therein and one or more processors. The one or more processors configured to execute the computer-readable instructions to detect at least one uplink signal between a mobile device and a neighboring network component; determine a timing of the at least one uplink signal; determine a current system timing of the target network component; and adjust the current system timing of the target network component using the timing of the at least one uplink signal.

In one aspect of the present disclosure, one or more non-transitory computer-readable medium have computer-readable instructions stored therein, which when executed by one or more processors of a network component, cause the one or more processors to detect at least one uplink signal between a mobile device and a neighboring network component; determine a timing of the at least one uplink signal; determine a current system timing of the target network component; and adjust the current system timing of the target network component using the timing of the at least one uplink signal.

## DETAILED DESCRIPTION

As indicated above, due to FTP limitations, accurate setting of system timing of small cell base stations involved in multi-cell transmission/reception is challenging. Discussed hereinafter are examples directed to acquiring/determining system timing from mobile devices through the uplink signals transmitted between such mobile devices and nearby base stations.

These examples are based on the following assumptions. First, a target small cell base station (the timing of which is to be determined according to examples described herein) is deployed as overlay or underlay with other macro and/or small cells (e.g., femto cells, pico cells, etc.). Second, there are overlapped coverage areas on the cell boundaries where mobile devices are connected to macro and/or small cells but the target small cell base station can still detect each uplink signal between nearby mobile device and the macro and/or small cells.

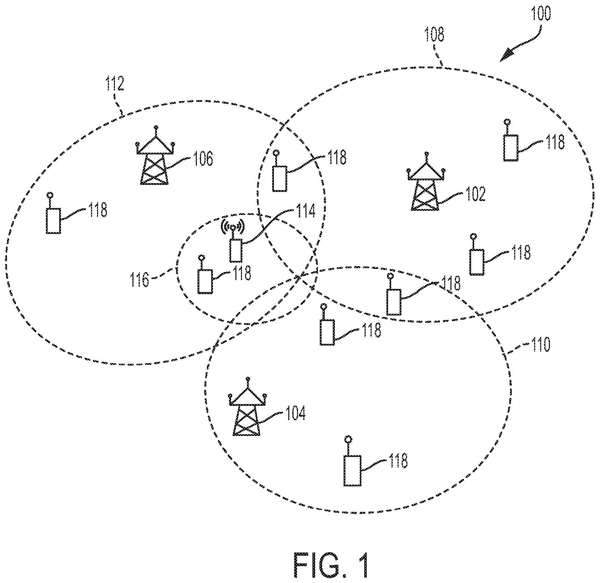

First, an example network to which the present disclosure applies, will be described with reference to FIG. 1. FIG. 1 illustrates an example network setting, according to an aspect of the present disclosure.

As shown in FIG. 1, network 100 includes 3 macro base stations (BS) 102, 104 and 106. Each of the BSs 102, 104 and 106 provides network connectivity for cell sites 108, 110 and 112, respectively. Macro BSs 102, 104 and 106 may be any known or to be developed base station including, but not limited to, a Global System for Mobile Communication (GSM) base transceiver station (BTS), a Long Term Evolution (LTE) evolved NodeB (e-NodeB), a 5G NodeB (gNB). Macro BSs 102, 104 and 106 may be referred to as nearby or neighboring BSs 102, 104 and 106 or more generally as network components 102, 104 and 106.

Network 100 also includes target small cell base station 114 that can provide network connectivity for cell site 116. Target small cell base station 114 may also be referred to as target access node or target BS or target network component 114.

Cell sites 108, 110, 112 and 116 may overlap as shown in FIG. 1. Target BS 114 can be any known or to be developed small cell base station including but not limited to a micro cell, femto cell and/or pico cell base station. Each of the macro BSs 102, 104 and 106 as well as target BS 114 can communicate with nearby mobile devices within their respective coverage areas through downlink and/or uplink signals and can provide backhaul connectivity to a core network (e.g., for authorization, authentication, billing, etc.) as well as the wider Internet.

Network setting 100 also illustrates several mobile devices 118 that can be present in coverage area of any one or more of macro BSs 102, 104 and 106 and/or target BS 116. Mobile devices 118 can be any known or to be developed device capable of establishing a wireless communication to other devices and/or any one of macro BSs 102, 104 and 106 and/or target BS 116. Examples of mobile devices 118 include, but are not limited to, a mobile device, a smart phone, a laptop, a tablet, etc.

While FIG. 1 illustrates a certain number of BSs, cell sites and/or mobile devices, the present disclosure is not limited thereto. Network 100 can include more or fewer cell sites and associated BSs of varying sizes (e.g., macro, femto, pico, micro, etc.) and/or more or fewer mobile devices. Furthermore, network 100 can include any number of other components that are known for ordinary and necessary operations thereof.

Having described an example network, the disclosure now turns to describing examples, where system timing of target BS 114 is to be adjusted or corrected. As noted above, target BS 114 may be involved in providing services to mobile devices that are using multi-cell transmission/reception. Target BS 114 can detect uplink signal transmissions between any one of mobile devices 118 and any one of macro BSs 102, 104 and 106 and, as will be described below, can use the timing included in such uplink signals to adjust its own system timing.

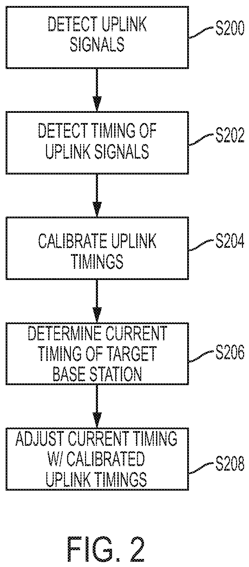

FIG. 2 illustrates an example process for adjusting timing of a target BS of FIG. 1, according to an aspect of the present disclosure. FIG. 2 will be described from the perspective of target BS 114. However, it is understood that target BS 114 can have one or more memories on which computer-readable instructions are stored for execution by one or more processors at target BS 114 for implementing the steps described below with reference to FIG. 2.

At S200, target BS 114 detects uplink signals between any one or more of mobile devices 118 to one or more of neighboring BSs 102, 104 and/or 106. That detection of uplink signals can be based on scanning a range of frequencies over which mobile devices 118 and neighboring BSs 102, 104 and 106 communicate.

The scanning and detection at S200 can be on the same carrier (co-channel) of target BS 114 or on adjacent carriers (carriers of neighboring macro BSs 102, 104 and/or 106). The channel bandwidth (BW) of adjacent channels can be obtained through a network controller that may reside at one or more of macro BSs 102, 104 and 106 or within a corresponding packet core of network 100. In another example, the scanning for detection of uplink signals can be done blindly, where target BS 114 scans all available BW options.

The detection at S200 can be in real-time or offline. In the offline instance, target BS 114 can perform the above scanning periodically (the periodicity of the periodic scanning can be a configurable parameter determined based on experiments and/or empirical studies), store the results and, every predetermined or set point in time, analyze the stored results to detect uplink signals.

At S202, target BS 114 detects timing of uplink signals detected at S200. Detected timing(s) of uplink signals may be referred to as uplink timings(s).

In one example, target BS 114 can detect uplink timing(s) by leveraging the cyclic prefix of the uplink signals to compute self-correlation of each uplink signal and detect the timing of the peaks on the self-correlation.

In another example, target BS 114 can detect uplink timing(s) by performing blind detection. In a blind detection, for each time step (a configurable parameter that may be determined based on experiments and/or empirical studies), target BS 114 can compute a Fast Fourier Transform (FFT) of each uplink signal and check the corresponding signal constellation in frequency domain. The correct timing corresponds to max Modulation Error Ratio (MER) in each uplink signal constellation.

In another example, target BS 114 can detect uplink timings by detecting locations of uplink reference signals. This detection can be done in either frequency or time domain.

In one example, the blind detection method and detection of location of uplink reference signals may need the physical PHY layer configurations information (for example, Pseudo Noise (PN) sequence for the reference signal) used by macro BSs 102, 104 and 106. Such configuration information can be obtained through a network controller that may reside at one or more of neighboring BSs 102, 104 and 106 or within a corresponding packet core of network 100.

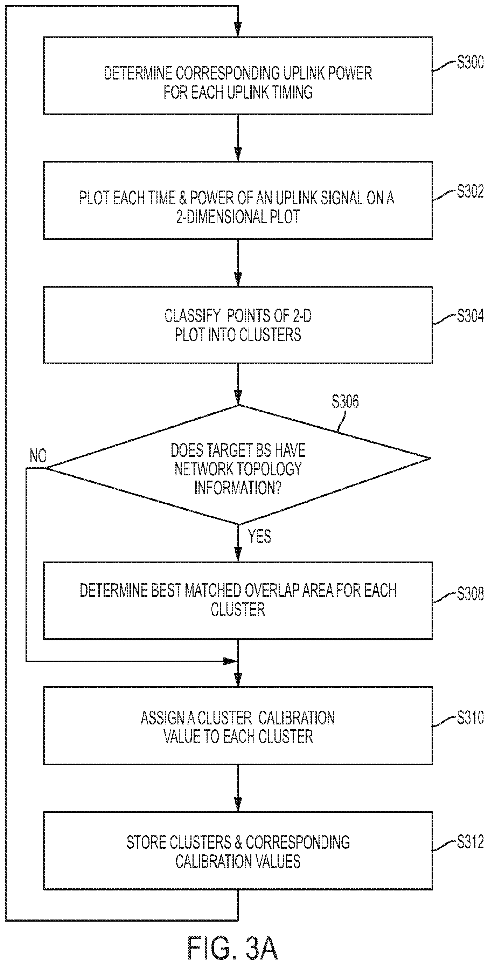

At S204, target BS 114 calibrates one or more of uplink timings detected at S202. Examples of calibrating the timing(s) will be further described below with reference to FIGs. 3A-B. The result of the process at S204 may be referred to as one or more calibrated uplink timings.

At S206, target BS 114 determines its current timing, according to any known or to be developed method. In one example S206 may be performed before, simultaneous with or after S200-S204.

In one example, target BS's 114 current system timing is the starting point for any adjustment. If there are active mobile devices 118 currently being served by target BS 114 (e.g., mobile devices 118 on radio resource connection RRC_CONNECTED status), the system timing will be anchored and adjusted gradually to ensure no service disruptions to active mobile devices 118.

At S208, target BS 114 adjusts its current timing using the timing of any one or more of the calibrated uplink timings determined at S202.

In one example, the calibrated uplink timings may each be assigned a weight that can be indicative of their importance in adjusting the current timing of target BS 114. For example, uplink timings of uplink signals to neighboring BSs (e.g., BS 102, 104 and/or 106) with access to GNSS (zero (0) hop BSs) may be rated as the most accurate (e.g., can be given a weight of 0.9, 0.95, 1, etc. with weights ranging from 0 to 1). Furthermore, uplink timings of uplink signals to neighboring BSs (e.g., BSs 102, 104 and/or 106) that are directly adjacent to BSs with access to GNSS (one(1) hop BSs) may be rated as less accurate than zero hop BSs (e.g., can be given a weight of 0.75, 0.8, 0.85, etc.). Such hierarchical rating of BSs can continue for two hops, three hops, etc. neighboring BSs. In one example, BSs with their timing acquired from network through 1588 PTP can be rated as well, based on their distance (number of hops) to a grand master (GM).

In one example, only calibrated uplink timings from neighboring BSs with higher accuracy ratings are used to adjust the timing of target BS 114 (e.g., uplink signals to zero hop, one hop and two hops BSs will be used but all other timings will be ignored).

Such rating information of different BSs (depending on hops from GNSS) may be provided to target BS 114 in advance (e.g., via core packet of network 100).

In one example, target BS 114 determines if a difference between its current timing (determined at S206) and any one or more of calibrated uplink timings (or a weighted average of all the calibrated timings, determined at S204) have a difference that is greater than a threshold (a configurable parameter determined based on experiments and/or empirical studies). If so, target BS 114 adjusts its timing to be the same as one or more of the calibrated uplink timings or a weighted average of all the calibrated uplink timings.

The disclosure now turns to example embodiments of calibrating timings of uplink signals at S204.

Before an uplink timing of an uplink signal detected between a mobile device 118 and a neighboring BS (e.g., one of BSs 102, 104 and 106) is used in adjusting a current timing of target BS 114, the uplink timing should be calibrated to accommodate the timing offset due to the difference between the distances of the mobile device 118 to the neighboring BS (e.g., one of BSs 102, 104 and 106) and the target BS 114.

The uplink timing may be set in such a way that the uplink signals from all mobile devices 118 to a given neighboring BS, regardless of their distances to such neighboring BS, arrive at the neighboring BS receiver at the same time. Every uplink signal can have a different uplink timing than other uplink signals, due to the different distances from the neighboring BS. As a result, the uplink timing detected at the small cell will have an offset, which will be accounted for by the calibration process mentioned above briefly and as will be described in more detail below.

As noted above, a detected uplink timing may be calibrated to adjust to timing offset resulting from different distances of a given mobile device 118 to target BS 114 and a given neighboring BS (e.g., one of BSs 102, 104 and/or 106). A corresponding calibration value may be determined based on the following relationship:

$$t\_cal = t\_det + (d2-d1)/C \qquad (1)$$

where t_det is the detected uplink timing of a mobile device 118 that connects to a neighboring BS, t_cal is the calibrated timing that will be used for adjusting timing of target BS 114. d1 and d2 are, respectively, the distances from mobile device 118 to target BS 114 and a corresponding neighboring BS and C is the speed of light.

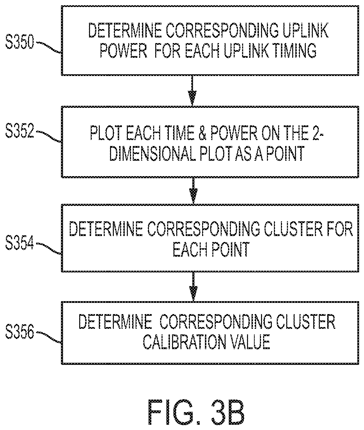

Calibration value mentioned above is the value of (d2-d1), which can be estimated using a self-learning algorithm developed using uplink signals powers and uplink timings and can further be complemented by information on network topology of network 100 (if available and known to target BS 114). For example, the network topology information can provide estimates of "d2" and "d1" to be used for determining the calibrated timing using equation (1). Below and with respect to FIG. 3A, the self-learning algorithm is first described and then determination of the calibration value using the self-learning algorithm will be described with reference to FIG. 3B.

FIGs. 3A-B will be described from the perspective of target BS 114. However, it is understood that target BS 114 can have one or more memories on which computer-readable instructions are stored for execution by one or more processors at target BS 114 for implementing the steps described below with reference to FIGs. 3A-B.

FIG. 3A illustrates an example self-learning algorithm for determining uplink timing calibration values, according to an aspect of the present disclosure.

At S300, for any given detected uplink timing (at S202 of FIG. 2), target BS 114 determines a corresponding uplink power of the corresponding uplink signal, according to any known or to be developed method of determining power of an uplink signal.

At S302, target BS 114 plots each detected uplink timing and the corresponding uplink power as a point in a 2-dimentional space of time versus power.

At S304, target BS 114 classifies points on the 2-dimenation space into clusters. Such classification may be based on any known or to be developed clustering and classification methods such as Density-Based Spatial Clustering of Applications with Noise (DBSCAN).

At S306, target BS 114 determines if it has network topology information of network 100 of FIG. 1. Network topology information can include cell coverages (radius) and the locations of neighboring BSs (e.g., BSs 102, 104 and 106) relative to target BS 114. Network topology information may be provided to target BS 114 periodically by the associated packet core of network 100.

If at S306, target BS 114 determines that it does not have the network topology information of network 100, the process proceeds to S310, which will be described below.

However, if at S306, target BS 114 determines that is has the network topology information, then at S308, target BS 114 finds the best match overlapped area for each cluster and assigns it thereto such that each cluster may be associated with one of the neighboring BSs 102, 104 or 106.

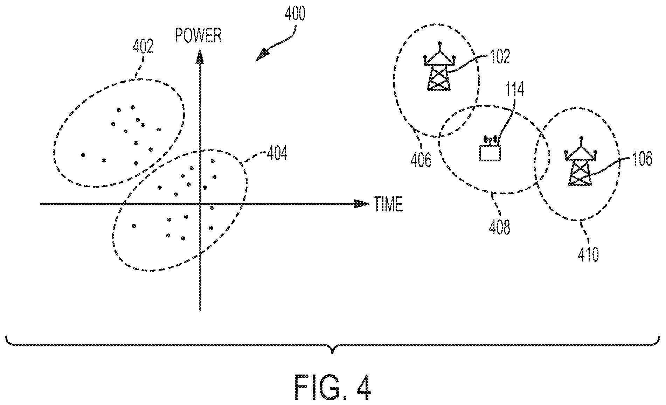

FIG. 4 illustrates an example of cluster classifications and assigned overlapped areas described with reference to FIG. 3A, according to an aspect of the present disclosure.

2-dimensional plot 400 is an example of the 2-dimensional time versus power space described above with reference to FIG. 3A. As can be seen, over time and as target BS 114 detects more uplink signals and associated uplink powers, more points will be plotted on 2-dimensional plot 400 and the cluster identification accuracy increases. 2-dimensional plot 400 includes two example clusters 402 and 404

FIG. 4 also illustrates overlap area assignments of S308, where each of the areas 406, 408 and 410 are assigned to neighboring BS 102, target BS 114 and neighboring BS 106. Neighboring BS 102 and 106 are used as example only. However, such geographical area assignment can expand to include any other neighboring BS of target BS 114.

Referring back to FIG. 3, at S310, target BS 114 assigns a cluster calibration value to each cluster 402 and 404 on 2-dimensional plot 400. In one example, the cluster calibration value assigned to a cluster is calculated using weighted averaging of the detected timings of uplink signals that are classified into that particular cluster.

At S312, target BS 114 may store each cluster and corresponding cluster calibration value in a table on an associated memory.

The self-learning algorithm of FIG. 3 may be performed continuously by target BS 114 as shown in FIG. 3A, where after S312, the process reverts back to S300 and is repeated. The clusters and their associated cluster calibration values are continuously improved with more points (more uplink signals and corresponding timings and uplink powers) collected over time.

FIG. 3B illustrates an example method of using self-learning algorithm of FIG. 3A to determine uplink timing calibration values, according to an aspect of the present disclosure.

At S350, target BS 114, for any given detected uplink timing (at S202 of FIG. 2), determines a corresponding uplink power of the corresponding uplink signal, according to any known or to be developed method of determining power of an uplink signal.

At S352, target BS 114 plots each detected uplink timing and the corresponding uplink power as a point on a 2-dimentional plot (e.g., 2-dimensional plot 400 of FIG. 4).

At S354, target BS 114 determines (identifies) which cluster (determined and continuously updated per FIG. 3A), the plotted point belongs to.

At S356 and upon identifying the appropriate cluster, target BS 114 determines a corresponding cluster calibration value by performing a look up in a table storing clusters and corresponding cluster calibration values (per S312 of FIG. 3A).

At S358, target BS 114 calibrates each uplink timing using the corresponding calibration value determined at S356. The cluster calibration value is used as the value of d2-d1 in equation (1) to determine a calibrated uplink timing using equation (1).

The disclosure now turns to examples of system architecture and network devices that can be used as components of network 100 (e.g., an example computing device to be used as target BS 114 or any other component in network 100).

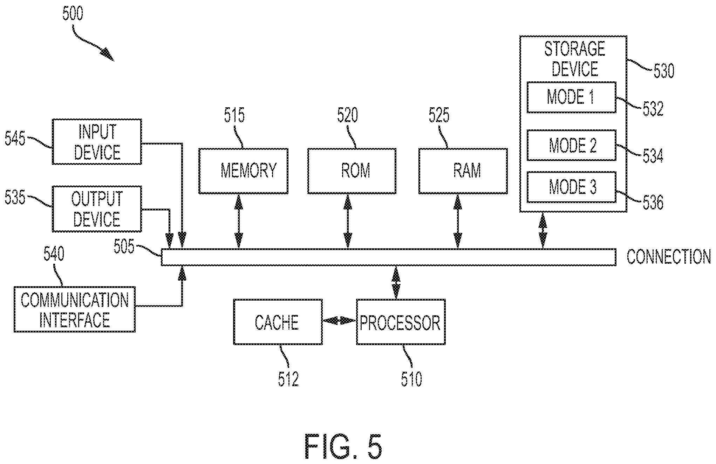

FIG. 5 illustrates computing system architecture for use in the network of FIG. 1, according to an aspect of the present disclosure. Computing system architecture 500 has components that are in electrical communication with each other using a connection 505, such as a bus. Exemplary system 500 includes a processing unit (CPU or processor) 510 and a system connection 505 that couples various system components including the system memory 515, such as read only memory (ROM) 520 and random access memory (RAM) 525, to the processor 510. The system 500 can include a cache of high-speed memory connected directly with, in close proximity to, or integrated as part of the processor 510. The system 500 can copy data from the memory 515 and/or the storage device 530 to the cache 512 for quick access by the processor 510. In this way, the cache can provide a performance boost that avoids processor 510 delays while waiting for data. These and other modules can control or be configured to control the processor 510 to perform various actions. Other system memory 515 may be available for use as well. The memory 515 can include multiple different types of memory with different performance characteristics. The processor 510 can include any general purpose processor and a hardware or software service, such as service 1 532, service 2 534, and service 3 536 stored in storage device 530, configured to control the processor 510 as well as a special-purpose processor where software instructions are incorporated into the actual processor design. The processor 510 may be a completely self-contained computing system, containing multiple cores or processors, a bus, memory controller, cache, etc. A multi-core processor may be symmetric or asymmetric.

To enable user interaction with the computing device 500, an input device 545 can represent any number of input mechanisms, such as a microphone for speech, a touch-sensitive screen for gesture or graphical input, keyboard, mouse, motion input, speech and so forth. An output device 535 can also be one or more of a number of output mechanisms known to those of skill in the art. In some instances, multimodal systems can enable a user to provide multiple types of input to communicate with the computing device 500. The communications interface 540 can generally govern and manage the user input and system output There is no restriction on operating on any particular hardware arrangement and therefore the basic features here may easily be substituted for improved hardware or firmware arrangements as they are developed.

Storage device 530 is a non-volatile memory and can be a hard disk or other types of computer readable media which can store data that are accessible by a computer, such as magnetic cassettes, flash memory cards, solid state memory devices, digital versatile disks, cartridges, random access memories (RAMs) 525, read only memory (ROM) 520, and hybrids thereof.

The storage device 530 can include services 532, 534, 536 for controlling the processor 510. Other hardware or software modules are contemplated. The storage device 530 can be connected to the system connection 505. In one aspect, a hardware module that performs a particular function can include the software component stored in a computer-readable medium in connection with the necessary hardware components, such as the processor 510, connection 505, output device 535, and so forth, to carry out the function.

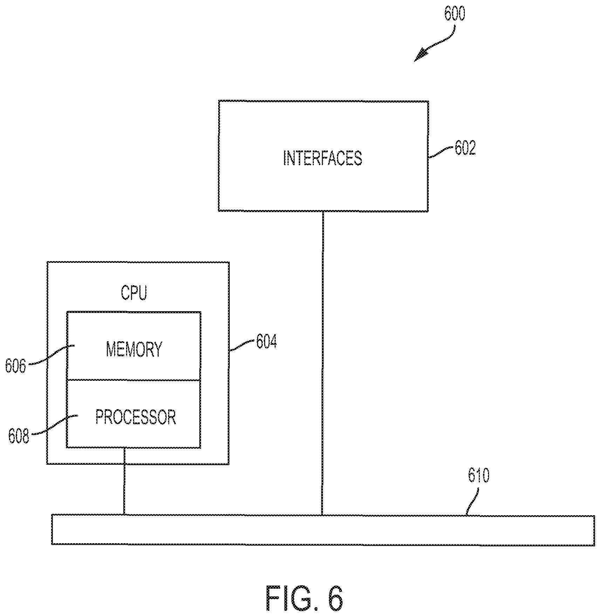

FIG. 6 illustrates an example network device suitable for performing switching, routing, load balancing, and other networking operations, according to an aspect of the present disclosure. Network device 600 includes a central processing unit (CPU) 604, interfaces 602, and a bus 610 (e.g., a PCI bus). When acting under the control of appropriate software or firmware, the CPU 604 is responsible for executing packet management, error detection, and/or routing functions. The CPU 604 preferably accomplishes all these functions under the control of software including an operating system and any appropriate applications software. CPU 604 may include one or more processors 608, such as a processor from the INTEL X86 family of microprocessors. In some cases, processor 608 can be specially designed hardware for controlling the operations of network device 600. In some cases, a memory 606 (e.g., non-volatile RAM, ROM, etc.) also forms part of CPU 604. However, there are many different ways in which memory could be coupled to the system.

The interfaces 602 are typically provided as modular interface cards (sometimes referred to as "line cards"). Generally, they control the sending and receiving of data packets over the network and sometimes support other peripherals used with the network device 600. Among the interfaces that may be provided are Ethernet interfaces, frame relay interfaces, cable interfaces, DSL interfaces, token ring interfaces, and the like. In addition, various very high-speed interfaces may be provided such as fast token ring interfaces, wireless interfaces, Ethernet interfaces, Gigabit Ethernet interfaces, ATM interfaces, HSSI interfaces, POS interfaces, FDDI interfaces, WIFI interfaces, 3G/4G/5G cellular interfaces, CAN BUS, LoRA, and the like. Generally, these interfaces may include ports appropriate for communication with the appropriate media. In some cases, they may also include an independent processor and, in some instances, volatile RAM. The independent processors may control such communications intensive tasks as packet switching, media control, signal processing, crypto processing, and management. By providing separate processors for the communications intensive tasks, these interfaces allow the master microprocessor 604 to efficiently perform routing computations, network diagnostics, security functions, etc.

Although the system shown in FIG. 6 is one specific network device of the present invention, it is by no means the only network device architecture on which the present invention can be implemented. For example, an architecture having a single processor that handles communications as well as routing computations, etc., is often used. Further, other types of interfaces and media could also be used with the network device 600.

Regardless of the network device's configuration, it may employ one or more memories or memory modules (including memory 606) configured to store program instructions for the general-purpose network operations and mechanisms for roaming, route optimization and routing functions described herein. The program instructions may control the operation of an operating system and/or one or more applications, for example. The memory or memories may also be configured to store tables such as mobility binding, registration, and association tables, etc. Memory 606 could also hold various software containers and virtualized execution environments and data.

The network device 600 can also include an application-specific integrated circuit (ASIC), which can be configured to perform routing and/or switching operations. The ASIC can communicate with other components in the network device 600 via the bus 610, to exchange data and signals and coordinate various types of operations by the network device 600, such as routing, switching, and/or data storage operations, for example.

For clarity of explanation, in some instances the present technology may be presented as including individual functional blocks including functional blocks comprising devices, device components, steps or routines in a method embodied in software, or combinations of hardware and software.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, USB devices provided with non-volatile memory, networked storage devices, and so on.

Devices implementing methods according to these disclosures can comprise hardware, firmware and/or software, and can take any of a variety of form factors. Typical examples of such form factors include laptops, smart phones, small form factor personal computers, personal digital assistants, rackmount devices, standalone devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

Claim language reciting "at least one of" refers to at least one of a set and indicates that one member of the set or multiple members of the set satisfy the claim. For example, claim language reciting "at least one of A and B" means A, B, or A and B.

**Claims**

1. A method comprising:

   detecting (S200), by a target base station, BS, at least one uplink signal between a mobile device and a neighboring BS;
   determining (S202), by the target BS, a timing of the at least one uplink signal;
   calibrating (S204), by the target BS, the timing of the at least one uplink signal to yield at least one calibrated timing, wherein calibrating the timing includes:

      determining (S300) a corresponding uplink power of the at least one uplink signal;
      plotting (S302) the timing and the corresponding uplink power of the at least one uplink signal as a point on a 2-dimensional power and time plot;
      identifying (S304) a cluster to which the point belongs;
      determining (S310) a cluster calibration value for the cluster;
      using the cluster calibration value as a corresponding calibration value for the timing of the at least one uplink signal; and
      calibrating the timing of the at least one uplink signal using the corresponding calibration value to yield the at least one calibrated timing;

   determining (S206), by the target BS, a current system timing of the target BS; and
   adjusting (S208), by the target BS, the current system timing of the target BS based on the at least one calibrated timing.

2. The method of claim 1, wherein determining the corresponding calibration value is further based on a network topology of a network in which the target BS and the neighboring BS are deployed.

3. The method of any of claims 1 to 2, further comprising:

   determining, by the target BS, a corresponding ranking for each of the at least one calibrated timing, wherein each of the at least one calibrated timing is used in adjusting the current system timing of the target BS based on the corresponding ranking.

4. A target base station, BS, configured to perform the method of any preceding claim.

**5.** The target BS of claim 4, configured to perform the method of claim 3, wherein the corresponding ranking is based on a number of hops that a corresponding neighboring BS is from a BS having access to a Global Navigation Satellite System.

**6.** The target BS of any of claims 4 to 5, wherein
the target BS is a small cell base station configured to provide small cell coverage within a 5th Generation, 5G, network.

**7.** One or more computer readable medium having computer-readable instructions stored therein, which when executed by one or more processors, cause the one or more processors to perform the method of any of claims 1 to 3.

**Patentansprüche**

**1.** Ein Verfahren, aufweisend:

Erfassen (S200) durch eine Ziel-Basisstation,BS, von mindestens einem Uplink-Signal zwischen einem mobilen Gerät und einer benachbarten BS;
Bestimmen (S202) durch die Ziel-BS einer Zeitsteuerung des mindestens einen Uplink-Signals;
Kalibrieren (S204) durch die Ziel-BS der Zeitsteuerung des mindestens einen Uplink-Signals, um mindestens eine kalibrierte Zeitsteuerung zu erhalten, wobei das Kalibrieren der Zeitsteuerung Folgendes aufweist:

Bestimmen (S300) einer entsprechenden Uplink-Leistung des mindestens einen Uplink-Signals;
Aufzeichnen (S302) der Zeitsteuerung und der entsprechenden Uplink-Leistung des mindestens einen Uplink-Signals als Punkt in einem zweidimensionalen Leistungs- und Zeitdiagramm;
Identifizieren (S304) eines Clusters, zu dem der Punkt gehört;
Bestimmen (S310) eines Clusterkalibrierungswerts für den Cluster;
Verwenden des Clusterkalibrierungswerts als entsprechenden Kalibrierungswert für die Zeitsteuerung des mindestens einen Uplink-Signals; und
Kalibrieren der Zeitsteuerung des mindestens einen Uplink-Signals unter Verwendung des entsprechenden Kalibrierungswerts, um die mindestens eine kalibrierte Zeitsteuerung zu erhalten;

Bestimmen (S206) durch die Ziel-BS einer aktuellen Systemzeitsteuerung der Ziel-BS; und
Anpassen (S208) durch die Ziel-BS der aktuellen Systemzeitsteuerung der Ziel-BS basierend auf der mindestens einen kalibrierten Zeitsteuerung.

**2.** Das Verfahren nach Anspruch 1, wobei das Bestimmen des entsprechenden Kalibrierungswerts weiter auf einer Netzwerktopologie eines Netzwerks basiert, in dem die Ziel-BS und die benachbarte BS eingesetzt sind.

**3.** Das Verfahren nach einem der Ansprüche 1 bis 2, weiter aufweisend:

Bestimmen durch die Ziel-BS einer entsprechenden Rangfolge für jede der mindestens einen kalibrierten Zeitsteuerung, wobei
jede der mindestens einen kalibrierten Zeitsteuerung verwendet wird, um die aktuelle Systemzeitsteuerung der Ziel-BS basierend auf der entsprechenden Rangfolge anzupassen.

**4.** Eine Ziel-Basisstation, BS, konfiguriert, um das Verfahren nach einem der vorhergehenden Ansprüche auszuführen.

**5.** Die Ziel-BS nach Anspruch 4, konfiguriert, um das Verfahren nach Anspruch 3 auszuführen, wobei die entsprechende Rangfolge auf einer Anzahl von Hops basiert, die eine entsprechende benachbarte BS von einer BS mit Zugang zu einem Globalen Navigationssatellitensystem entfernt ist.

**6.** Die Ziel-BS nach einem der Ansprüche 4 bis 5, wobei
die Ziel-BS eine Small-Cell-Basisstation ist, die konfiguriert ist, um Small-Cell-Abdeckung innerhalb eines 5. Generation (5G) Netzwerks bereitzustellen.

**7.** Ein oder mehrere computerlesbare Medien mit darin gespeicherten computerlesbaren Anweisungen, die, wenn sie von einem oder mehreren Prozessoren ausgeführt werden, den einen oder mehreren Prozessoren veranlassen, das Verfahren nach einem der Ansprüche 1 bis 3 auszuführen.

**Revendications**

1.  Procédé comprenant le fait :

    de détecter (5200), par une station de base cible, BS, au moins un signal de liaison montante entre un dispositif mobile et une BS voisine ;
    de déterminer (S202), par la BS cible, une synchronisation de l'au moins un signal de liaison montante ;
    d'étalonner (S204), par la BS cible, la synchronisation de l'au moins un signal de liaison montante, afin de produire au moins une synchronisation étalonnée, procédé dans lequel l'étalonnage de la synchronisation comprend le fait :

    de déterminer (5300) une puissance de liaison montante correspondante de l'au moins un signal de liaison montante ;
    de tracer (5302) la synchronisation et la puissance de liaison montante correspondante de l'au moins un signal de liaison montante comme un point sur un graphique de puissance et de temps en 2 dimensions ;
    d'identifier (S304) un cluster auquel le point appartient ;
    de déterminer (S310) une valeur d'étalonnage de cluster pour le cluster ;
    d'utiliser la valeur d'étalonnage de cluster comme une valeur d'étalonnage correspondante pour la synchronisation de l'au moins un signal de liaison montante ; et
    d'étalonner la synchronisation de l'au moins un signal de liaison montante, en utilisant la valeur d'étalonnage correspondante afin de produire l'au moins une synchronisation étalonnée ;

    de déterminer (S206), par la BS cible, une synchronisation de système en cours de la BS cible ; et
    de régler (S208), par la BS cible, la synchronisation de système en cours de la BS cible, en se basant sur l'au moins une synchronisation étalonnée.

2.  Procédé selon la revendication 1, dans lequel le fait de déterminer la valeur d'étalonnage correspondante est basé en outre sur une topologie de réseau concernant un réseau dans lequel la BS cible et la BS voisine sont déployées.

3.  Procédé selon l'une des revendications 1 à 2, comprenant en outre le fait :
    de déterminer, par la BS cible, un classement correspondant pour chacune de celles formant l'au moins une synchronisation étalonnée, procédé dans lequel :
    chacune de celles formant l'au moins une synchronisation étalonnée est utilisée pour le réglage de la synchronisation de système en cours de la BS cible, en se basant sur le classement correspondant.

4.  Station de base cible, BS, configurée pour mettre en oeuvre le procédé selon l'une quelconque des revendications précédentes.

5.  BS cible selon la revendication 4, configurée pour mettre en oeuvre le procédé selon la revendication 3, station de base cible dans laquelle le classement correspondant est basé sur un certain nombre de sauts qu'effectue une BS voisine correspondante à partir d'une BS ayant accès à un système mondial de navigation par satellite.

6.  BS cible selon l'une des revendications 4 à 5, dans laquelle :
    la BS cible est une station de base à petites cellules, ladite station de base étant configurée pour fournir une couverture de petites cellules dans un réseau de 5ème génération, 5G.

7.  Un ou plusieurs supports qui sont lisibles par ordinateur et dans lesquels sont stockées des instructions lisibles par ordinateur, instructions qui, lorsqu'elles sont exécutées par un ou plusieurs processeurs, amènent le ou les processeurs à mettre en oeuvre le procédé selon l'une quelconque des revendications 1 à 3.

FIG. 1

```
┌─────────────────┐
│  DETECT UPLINK  │──── S200
│     SIGNALS     │
└─────────────────┘
         │
         ▼
┌─────────────────┐
│ DETECT TIMING OF│──── S202
│  UPLINK SIGNALS │
└─────────────────┘
         │
         ▼
┌─────────────────┐
│ CALIBRATE UPLINK│──── S204
│     TIMINGS     │
└─────────────────┘
         │
         ▼
┌─────────────────┐
│DETERMINE CURRENT│
│  TIMING OF TARGET│──── S206
│   BASE STATION  │
└─────────────────┘
         │
         ▼
┌─────────────────┐
│ADJUST CURRENT TIMING│
│   W/ CALIBRATED │──── S208
│  UPLINK TIMINGS │
└─────────────────┘
```

FIG. 2

```
┌─────────────────────────────────────┐
│  DETERMINE CORRESPONDING UPLINK POWER │ ── S300
│      FOR EACH UPLINK TIMING           │
└─────────────────────────────────────┘
                 │
                 ▼
┌─────────────────────────────────────┐
│  PLOT EACH TIME & POWER OF AN UPLINK  │ ── S302
│   SIGNAL ON A 2-DIMENSIONAL PLOT      │
└─────────────────────────────────────┘
                 │
                 ▼
┌─────────────────────────────────────┐
│      CLASSIFY POINTS OF 2-D           │ ── S304
│       PLOT INTO CLUSTERS              │
└─────────────────────────────────────┘
                 │
                 ▼
            ╱──────────╲                  S306
     NO    ╱ DOES TARGET BS ╲
 ◄────────◄   HAVE NETWORK    ►
           ╲  TOPOLOGY        ╱
            ╲ INFORMATION?  ╱
             ╲────────────╱
                 │ YES
                 ▼
┌─────────────────────────────────────┐
│  DETERMINE BEST MATCHED OVERLAP AREA  │ ── S308
│         FOR EACH CLUSTER              │
└─────────────────────────────────────┘
                 │
                 ▼
┌─────────────────────────────────────┐
│     ASSIGN A CLUSTER CALIBRATION      │ ── S310
│       VALUE TO EACH CLUSTER           │
└─────────────────────────────────────┘
                 │
                 ▼
┌─────────────────────────────────────┐
│    STORE CLUSTERS & CORRESPONDING     │ ── S312
│        CALIBRATION VALUES             │
└─────────────────────────────────────┘
```

FIG. 3A

S350 — DETERMINE CORRESPONDING UPLINK POWER FOR EACH UPLINK TIMING

S352 — PLOT EACH TIME & POWER ON THE 2-DIMENSIONAL PLOT AS A POINT

S354 — DETERMINE CORRESPONDING CLUSTER FOR EACH POINT

S356 — DETERMINE CORRESPONDING CLUSTER CALIBRATION VALUE

# FIG. 3B

FIG. 4

FIG. 5

600

INTERFACES 602

CPU

MEMORY 606

604

PROCESSOR 608

610

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014194130 A
- US 2013344878 A
- US 2013244653 A
- US 2012115496 A